# FASCICULE DE BREVET EUROPEEN

(11) **EP 2 128 427 B1**
(45) Date de publication et mention de la délivrance du brevet: **22.04.2015**
(21) Numéro de dépôt: 09159224.6
(22) Date de dépôt: 30.04.2009
(51) Int. Cl.: F02N 11/08

(54) **Procédé et dispositif de contrôle du temps de démarrage d'un moteur thermique de véhicule**
Verfahren und Vorrichtung zur Steuerung der Startzeit einer Fahrzeugwärmekraftmaschine
Method and device for controlling the starting time of a vehicle heat engine

(30) Priorité: 27.05.2008 FR 0853425
(43) Date de publication de la demande: 02.12.2009
(73) Titulaire: VALEO EQUIPEMENTS ELECTRIQUES MOTEUR, 94046 Créteil Cedex (FR)
(72) Inventeur: Rouis, Oussama, 92300, Levallois Perret (FR)

(56) Documents cités:
- EP-A- 1 469 587
- DE-A1- 10 359 486
- DE-A1-102006 057 892
- US-A1- 2006 017 290
- US-B1- 6 335 609

## Description

### DOMAINE TECHNIQUE DE L'INVENTION.

La présente invention concerne un procédé et un dispositif de contrôle du temps de démarrage d'un moteur thermique d'un véhicule.

L'invention concerne aussi un alterno-démarreur apte à la mise en oeuvre du procédé et comprenant ce dispositif.

### ARRIERE PLAN TECHNOLOGIQUE DE L'INVENTION.

Des considérations d'économie d'énergie et de réduction de la pollution, surtout en milieu urbain, conduisent les constructeurs de véhicules automobiles à équiper leurs modèles d'un système d'arrêt/ relance automatique, tel que le système connu sous le terme anglo-saxon de « Stop and Go ».

Ainsi que le rappelle la société VALEO EQUIPEMENTS ELECTRIQUES MOTEUR dans la demande de brevet FR2875549, les véhicules sont rendus aptes à fonctionner selon le mode « Stop and Go » grâce à une machine électrique réversible, ou alterno-démarreur, couplée au moteur thermique, alimentée par un onduleur en mode « démarreur ».

L'utilisation d'un alterno-démarreur dans un mode de fonctionnement « Stop and Go » consiste, sous certaines conditions, à provoquer l'arrêt complet du moteur thermique lorsque le véhicule est lui-même à l'arrêt, puis à redémarrer le moteur thermique à la suite, par exemple, d'une action du conducteur interprétée comme une demande de redémarrage.

Une situation typique de « Stop and Go » est celle de l'arrêt à un feu rouge. Lorsque le véhicule s'arrête au feu, le moteur thermique est automatiquement stoppé, puis, quand le feu devient vert, le moteur est redémarré au moyen de l'alterno-démarreur, comme suite à la détection par le système de l'enfoncement de la pédale d'embrayage par le conducteur, ou de toute autre action traduisant la volonté du conducteur de redémarrer son véhicule.

Il va de soi que la fonction de relance automatique réalisée par un système alterno-démarreur est une fonction qui doit être aussi transparente que possible pour le conducteur du véhicule.

Dans les alterno-démarreurs constitués d'une machine électrique tournante polyphasée à inducteur, les courants de phases et le courant d'excitation sont généralement fournis simultanément par les circuits de puissance au moment du redémarrage.

Dans le brevet américain US6335609, il est constaté que, dans ces circonstances, le couple moteur ne peut être produit qu'avec un retard perceptible.

Ce délai est dû à l'établissement du flux magnétique dans le rotor, et il est proposé de réaliser un pré-fluxage de l'inducteur avant l'établissement des courants de phases, de manière à réduire le temps nécessaire au moteur thermique pour atteindre une vitesse de rotation prédéterminée.

Toutefois, le procédé est mis en oeuvre en contrôlant le courant d'excitation pendant une durée fixe, et ne semble pas adapté à des alterno-démarreurs alimentés par un réseau électrique de bord à tension variable, de type dit « 14+X ».

Un autre exemple est fourni par le document EP 1 469 587 A1 où l'intensité du courant de pré-fluxage est fonction de la charge de la batterie.

Il existe par conséquent un besoin pour un procédé et un dispositif qui permettent de maintenir dans des limites, acceptables par le conducteur, le temps de démarrage dans le cas d'une architecture de système d'arrêt/ relance automatique de type micro-hybride, où la tension du réseau électrique de bord dépend de l'état de charge de l'ultra-capacité.

### DESCRIPTION GENERALE DE L'INVENTION.

La présente invention vise à satisfaire ce besoin et a précisément pour objet un procédé de contrôle du temps de démarrage d'un moteur thermique d'un véhicule, qui est accouplé mécaniquement à une machine électrique tournante polyphasée à inducteur reliée à un réseau électrique de bord.

Le procédé dont il s'agit est du type de ceux consistant à réaliser un pré-fluxage en établissant un courant d'excitation dans l'inducteur pendant un temps de pré-fluxage prédéterminé avant un établissement de courants de phases.

Selon l'invention, le temps de pré-fluxage prédéterminé est, de manière remarquable, une fonction d'une tension variable (dite 14+X Volt) du réseau électrique de bord.

Fort avantageusement, ce temps de pré-fluxage prédéterminé est augmenté quand la tension du réseau électrique de bord baisse dans une plage de tensions nominale.

Selon une autre caractéristique du procédé selon l'invention, le temps de pré-fluxage prédéterminé est compris entre une valeur minimum au dessous de laquelle le temps de démarrage est supérieur à un seuil de référence, et une valeur maximum correspondant à la saturation magnétique de l'inducteur.

De préférence, le temps de pré-fluxage prédéterminé est tabulé pour le seuil de référence du temps de démarrage en fonction de la tension du réseau électrique de bord, au cours d'une étape préalable, au moyen d'une interpolation linéaire à deux dimensions des variations du temps de démarrage en fonction du temps de pré-fluxage et d'un ensemble discret de niveaux de cette tension.

Le réseau électrique de bord est avantageusement connecté aux bornes d'au moins une ultra-capacité, ou similaire, et de ce fait, selon le procédé de l'invention, le temps de pré-fluxage prédéterminé est aussi, de manière remarquable, une fonction de la tension aux bornes de cette ultra-capacité.

L'invention concerne aussi un dispositif de contrôle du temps de démarrage d'un moteur thermique d'un véhicule adapté à la mise en oeuvre du procédé décrit ci-dessus.

De manière connue en soi, ce moteur thermique est accouplé mécaniquement à une machine électrique tournante polyphasée à inducteur alimentée par des circuits de puissance reliés à un réseau électrique de bord et contrôlés par un circuit de commande.

Le dispositif selon l'invention est remarquable en ce qu'il comprend des moyens de détermination d'un temps de pré-fluxage en fonction d'une tension du réseau électrique de bord.

De préférence, ces moyens sont inclus dans le circuit de commande et comprennent une mémoire contenant une tabulation du temps de pré-fluxage en fonction de la tension du réseau électrique de bord pour un seuil de référence du temps de démarrage.

Le réseau électrique de bord est avantageusement connecté aux bornes d'au moins une ultra-capacité, ou similaire.

Un alterno-démarreur destiné à un moteur thermique d'un véhicule présentant une fonction de freinage récupératif de type micro-hybride comprend aussi fort avantageusement le dispositif de contrôle selon l'invention décrit ci-dessus.

Ces quelques spécifications essentielles auront rendu évidents pour l'homme de métier les avantages apportés par l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est une représentation schématique d'un système d'arrêt/relance automatique de type micro-hybride utilisant un dispositif de contrôle du temps de démarrage selon l'invention.
La **Figure 2** montre le temps de démarrage d'un moteur thermique dans un système d'arrêt/ relance automatique analogue à celui représenté sur la **Figure 1****,** en fonction de la tension du réseau électrique de bord, en l'absence du dispositif selon l'invention.
La **Figure 3** montre les variations du temps de démarrage en fonction du temps de pré-fluxage et d'un ensemble discret de niveaux de la tension du réseau électrique de bord dans un système d'arrêt/ relance automatique analogue à celui représenté sur la **Figure 1**, en l'absence du dispositif selon l'invention.
La **Figure 4** montre les variations du temps de pré-fluxage en fonction de la tension du réseau électrique de bord selon le procédé de l'invention.
Les **Figures 5a et 5b** montrent un temps de démarrage constant en application du procédé selon l'invention pour deux tensions du réseau électrique de bord différentes.

### DESCRIPTION DU MODE DE REALISATION PREFERE DE L'INVENTION.

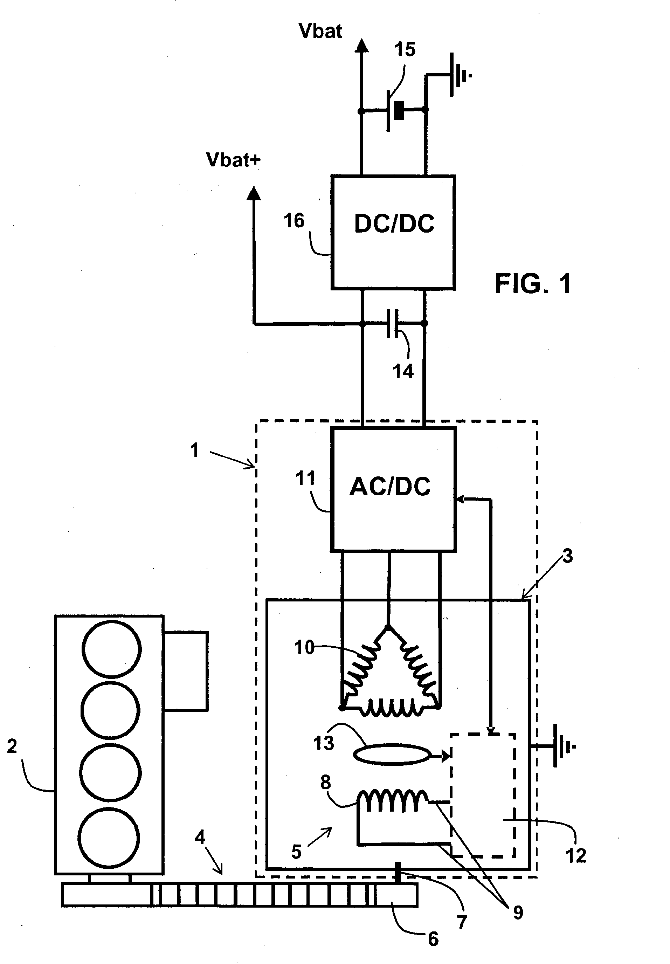

Le mode de réalisation préféré de l'invention concerne les véhicules équipés d'un alterno-démarreur avec un dispositif de récupération d'énergie au freinage, de type micro-hybride, tel que représenté schématiquement sur la **Figure 1****.**

La **Figure 1** montre un alterno-démarreur 1 couplé à un moteur thermique 2 de véhicule.

Cet alterno-démarreur 1 comprend une machine électrique polyphasée à excitation réversible 3 accouplée au moteur 2 au moyen d'une transmission 4 par courroie et poulies.

La machine électrique 3 comporte un rotor 5 solidaire d'une poulie de sortie 6 en bout d'arbre 7. Le rotor 5 présente un inducteur 8 alimenté au moyen d'un collecteur tournant par un circuit d'excitation 9.

La machine 3 comprend également des enroulements de phases 10, ou induit, alimentés par un onduleur 11.

Un circuit de commande 12 pilote les circuits de puissance de la machine 3, constitués par l'onduleur 11 et le circuit d'excitation 9, en fonction des informations fournies par un capteur de la position 13 du rotor 5, et de signaux de contrôle générés par une unité de contrôle électronique du véhicule.

L'unité de contrôle électronique reçoit des paramètres de fonctionnement du moteur 2, et d'autres informations de contexte par des liaisons filaires dédiées ou par un bus de communication de données embarqué de type CAN.

L'onduleur 11 est de préférence constitué par un circuit hacheur de la tension du réseau électrique de bord Vbat+X générant des impulsions, dont la fréquence et la largeur sont contrôlées par le circuit de commande 12, quand l'alterno-démarreur 1 fonctionne en moteur électrique.

Ce même circuit hacheur est un convertisseur alternatif - continu réversible qui fonctionne en redresseur synchrone quand l'alterno-démarreur 1 fonctionne en alternateur.

Dans l'architecture de type micro-hybride représentée sur la **Figure 1****,** le réseau électrique de bord est connecté aux bornes d'une ultra-capacité 14 au lieu d'être alimenté directement par une batterie de bord 15, comme dans une architecture classique.

Lorsqu'elle fonctionne en génératrice, la machine électrique 3 charge l'ultra-capacité 14 au moyen du convertiseur alternatif-continu réversible 11 fonctionnant en redresseur et fournit au réseau électrique de bord une tension Vbat+X supérieure à la tension de batterie Vbat.

Des circuits de conversion d'énergie 16 constitués par un convertisseur continu-continu, permettent des échanges d'énergie électrique entre la batterie de bord 15 et l'ultra-capacité 14.

Selon un principe général de l'invention, on propose, dans le cadre d'un système réalisant les fonctions de redémarrage automatique de maintenir constant le temps de démarrage du moteur thermique 2 quelle que soit la tension Vbat +X du réseau électrique de bord.

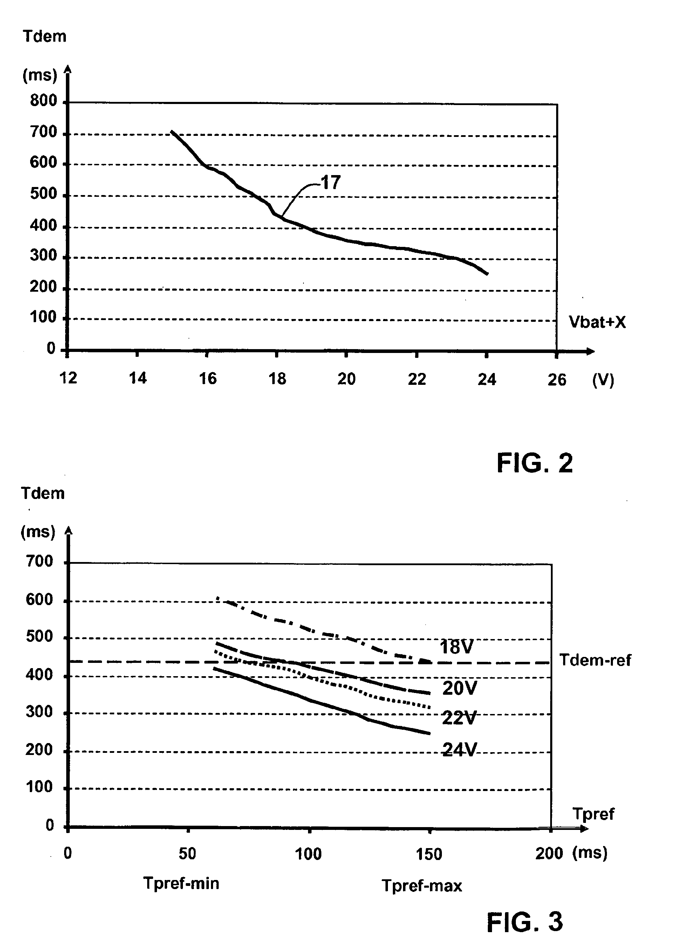

En effet, comme le montre bien la Figure 2, en l'absence de mise en oeuvre de mesures correctrices appropriées, le temps de démarrage Tdem du moteur thermique 2 dépend de la tension Vbat+X du réseau électrique de bord, c'est-à-dire de l'état de charge de l'ultra-capacité 14.

Les mesures 17 ont été réalisées pour un temps de pré-fluxage fixe, correspondant à la saturation magnétique de l'inducteur 8, et un profil d'angle constant.

Quand l'ultra-capacité 14 est faiblement chargée, le temps de démarrage Tdem, défini comme l'intervalle de temps entre l'instant où la machine électrique 3 applique un couple au moteur thermique 2 et l'instant où celui-ci atteint une vitesse de rotation de référence, peut atteindre, dans ces conditions, des valeurs inacceptables, compte tenu de l'objectif de transparence du système recherché.

Il est donc proposé une fonction de pondération qui ajuste les paramètres de démarrage pour assurer un temps de démarrage Tdem moyen pour toute une plage de tensions de fonctionnement nominale.

Dans le cas d'une ultra-capacité 14 de type EDLC (Condensateur électrochimique à double couche) comprenant par exemple 10 cellules élémentaires de 1500 F montées en série et ayant donc une capacité résultante de 150 F, et une tension de service de 25V, on considère que la plage de fonctionnement nominale est comprise entre 18 et 24V.

La **Figure 3** montre les résultats d'essais effectués sur un système micro-hybride analogue à celui montré sur la **Figure 1****,** sans dispositif de contrôle du temps de démarrage, en faisant varier le temps de pré-fluxage Tpref et pour plusieurs niveaux de la tension (18V, 20V, 22V, et 24V) du réseau électrique de bord Vbat+X.

Le temps de pré-fluxage Tpref varie entre une valeur minimum Tpref-min, au dessous de laquelle le temps de démarrage est toujours supérieur à un seuil de référence Tdem-ref, c'est-à-dire au dessous de laquelle la fonction démarrage est dégradée, même à la charge maximum de l'ultra-capacité 14, et une valeur maximum Tpref-max à partir de laquelle on observe la saturation magnétique de l'inducteur 8.

Si l'on choisi ce seuil de référence Tdem-ref comme le temps de démarrage Tdem à maintenir constant, il suffit d'utiliser une interpolation linéaire à deux dimensions pour calculer le temps de pré-fluxage Tpref correspondant à chaque valeur de la tension du réseau électrique de bord Vbat+X comprise dans la plage de tensions nominale.

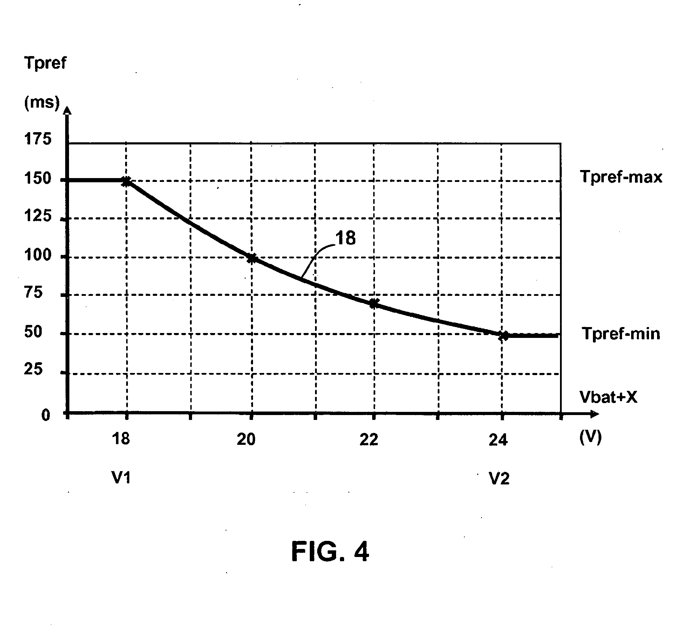

La **Figure 4** montre les valeurs interpolées 18 du temps de pré-fluxage Tpref permettant de conserver un temps de démarrage Tdem contant égal à Tdem-ref pour toute valeur de la tension Vbat+X du réseau électrique de bord comprise entre la tension minimale V1 (charge minimale de l'ultra-capacité 14), et la tension maximale V2 (charge maximale de l'ultra-capacité 14).

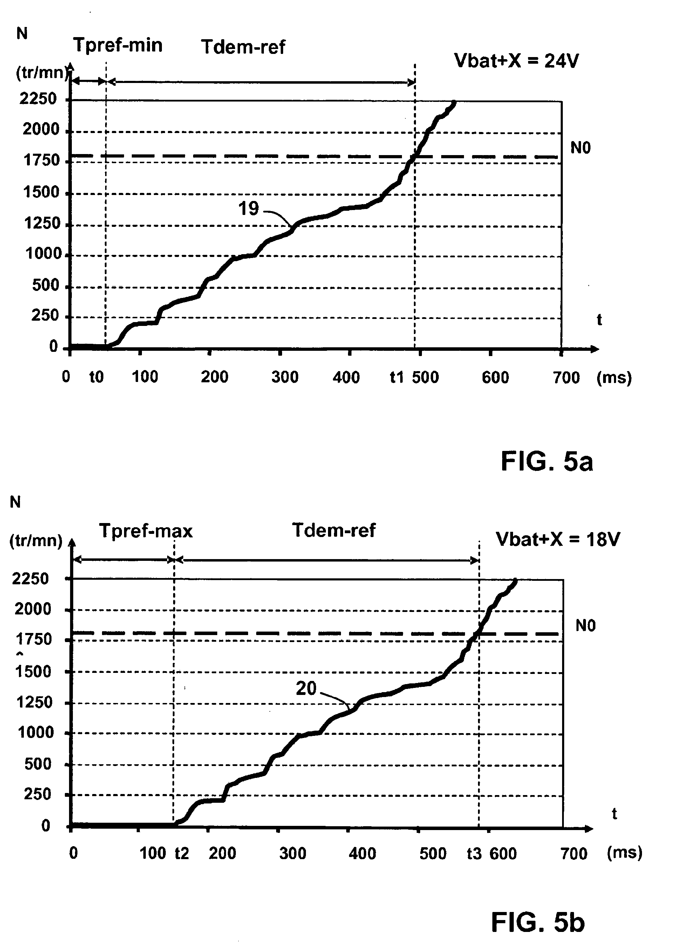

Les conséquences de la mise en oeuvre du procédé de contrôle du temps de démarrage Tdem selon l'invention dans le système d'arrêt/ relance automatique de type micro-hybride représenté sur la **Figure 1**, sont bien montrées sur les chronogrammes 19, 20 des **Figures 5a et 5b** qui indiquent la vitesse de rotation N de l'alterno-démarreur 1 en fonction du temps pendant la phase de démarrage. On notera, dans cet exemple, que la vitesse de rotation N de l'alterno-démarreur 1 est liée à celle Nm du moteur thermique 2 par un rapport d'environ 2,4 correspondant à un rapport de poulies de la transmission mécanique «alterno-démarreur / arbre moteur thermique ».

Le moteur thermique 2 étant à l'arrêt, le courant d'excitation est fourni au rotor 5 dès l'instant initial de la commande de redémarrage. Les courants de phases ne sont fournis au stator par l'onduleur 11 qu'à un instant t0 après un délai égal à la valeur minimum Tpref-min du temps de pré-fluxage Tpref dans le cas où la tension du réseau électrique de bord Vbat+X est la tension maximale V2 (**Figure 5a**).

La vitesse de rotation N croît à partir de l'instant t0 pour atteindre une vitesse de rotation de référence N0 à un instant t1, c'est-à-dire par définition, après un délai t1 - t0 égal au temps de démarrage de référence Tdem-ref.

Dans le cas où la tension du réseau électrique de bord Vbat+X est la tension minimale V1 (**Figure 5b**), les courants de phases ne sont fournis par l'onduleur 11 qu'à un instant t2 après un délai égal à la valeur maximum Tpref-max du temps de pré-fluxage Tpref.

La vitesse de rotation N atteint la vitesse de rotation de référence N0 à un instant t3 après le même délai Tdem-ref que dans le cas précédent.

Des chronogrammes analogues montrent que le délai entre l'instant de fourniture des courants de phases et l'instant où la vitesse de rotation de référence N0 est atteinte est constant quand la tension du réseau électrique de bord Vbat+X varie dans toute la plage de tensions nominale V1, V2, sous réserve que le temps de pré-fluxage Tpref suive la loi de variation représentée sur la **Figure 4****.**

Cette loi est tabulée dans une mémoire du dispositif de commande 12 de l'alterno-démarreur 1, qui détermine le temps de pré-fluxage Tpref approprié en fonction de la tension d'alimentation Vbat+X qui lui est appliquée.

Comme il va de soi, l'invention ne se limite pas au seul mode d'exécution préférentiel décrit ci-dessus.

Les mesures et résultats d'essais sont donnés à titre d'exemple seulement pour un alterno-démarreur de type 144/5 (diamètre du stator : 144 mm ; nombre de spires : 5) et une ultra-capacité EDLC de 150F/ 25V.

La valeur minimum Tpref-min du temps de pré-fluxage Tpref et la valeur maximum Tpref-max qui conviennent à ce modèle sont respectivement d'environ 50 ms et 150 ms quand la tension du réseau électrique de bord Vbat+X varie entre 18V et 24V, le seuil de référence Tdem-ref du temps de démarrage Tdem retenu, permettant à l'alterno-démarreur 1 d'atteindre la vitesse de rotation de référence N0 d'environ 1800 tr/mn, étant d'environ 440 ms. Cette vitesse de rotation de référence N0 d'environ 1800 tr/mn correspond à une vitesse de rotation de référence Nm0 du moteur thermique 2 d'environ 750 tr/mn (vitesse de ralenti du moteur thermique).

La description ci-dessus s'appliquerait à d'autres modèles d'alterno-démarreurs 1, ou d'autres types de stockeurs d'énergie, par exemple une batterie Ni-MH en remplacement de l'ultra-capacité 14, en retenant simplement des valeurs numériques de paramètres différentes de celles indiquées.

L'invention embrasse donc au contraire toutes les variantes possibles de réalisation qui resteraient dans le cadre défini par les revendications ci-après.

## Revendications

1. Procédé de contrôle du temps de démarrage (Tdem) d'un moteur thermique (2) d'un véhicule, ledit moteur (2) étant accouplé mécaniquement à une machine électrique tournante polyphasée à inducteur (3) reliée à un réseau électrique de bord, et ledit procédé étant de type de ceux consistant à réaliser un pré-fluxage en établissant un courant d'excitation dans ledit inducteur (8) pendant un temps de pré-fluxage (Tpref) prédéterminé avant un établissement de courants de phases, **caractérisé en ce que** ledit temps de pré-fluxage (Tpref) prédéterminé est une fonction de la tension (Vbat+X) dudit réseau électrique de bord et est augmenté quand ladite tension (Vbat+X) baisse dans une plage de tensions nominale (V1,V2).

2. Procédé de contrôle du temps de démarrage (Tdem) d'un moteur thermique (2) d'un véhicule selon la revendication 1, **caractérisé en ce que** ledit temps de pré-fluxage (Tpref) prédéterminé est compris entre une valeur minimum (Tpref-min) au dessous de laquelle ledit temps de démarrage (Tdem) est supérieur à un seuil de référence (Tdem-ref), et une valeur maximum (Tpref-max) correspondant à la saturation magnétique dudit inducteur (8).

3. Procédé de contrôle du temps de démarrage (Tdem) d'un moteur thermique (2) d'un véhicule selon la revendication 2, **caractérisé en ce que** ledit temps de pré-fluxage (Tpref) prédéterminé est tabulé pour ledit seuil de référence (Tdem-ref) dudit temps de démarrage (Tdem) en fonction de ladite tension (Vbat+X) au cours d'une étape préalable au moyen d'une interpolation linéaire à deux dimensions des variations dudit temps de démarrage (Tdem) en fonction dudit temps de pré-fluxage (Tpref) et d'un ensemble discret de niveaux de ladite tension (Vbat+X).

4. Procédé de contrôle du temps de démarrage (Tdem) d'un moteur thermique (2) d'un véhicule selon l'une quelconque des revendications 1 à 3 précédentes, **caractérisé en ce que** ledit réseau électrique de bord est connecté aux bornes d'au moins une ultra-capacité (14), ou similaire.

5. Dispositif de contrôle du temps de démarrage (Tdem) d'un moteur thermique (2) d'un véhicule adapté à la mise en oeuvre du procédé selon l'une quelconque des revendications 1 à 4 précédentes, ledit moteur (2) étant accouplé mécaniquement à une machine électrique tournante polyphasée à inducteur (3) alimentée par des circuits de puissances (9,11) reliés à un réseau électrique de bord et contrôlés par un circuit de commande (12), **caractérisé en ce qu'**il comprend des moyens de détermination d'un temps de pré-fluxage (Tpref) en fonction d'une tension dudit réseau électrique de bord (Vbat+X).

6. Dispositif de contrôle du temps de démarrage (Tdem) d'un moteur thermique (2) d'un véhicule selon la revendication 5, **caractérisé en ce que** lesdits moyens sont inclus dans ledit circuit de commande (12) et comprennent une mémoire contenant une tabulation dudit temps de pré-fluxage (Tpref) en fonction de ladite tension (Vbat+X) pour un seuil de référence dudit temps de démarrage (Tdem-ref).

7. Dispositif de contrôle du temps de démarrage (Tdem) d'un moteur thermique (2) d'un véhicule selon la revendication 6, **caractérisé en ce que** ledit réseau électrique de bord est connecté aux bornes d'au moins une ultra-capacité (14), ou similaire.

8. Dispositif de contrôle du temps de démarrage (Tdem) d'un moteur thermique (2) d'un véhicule selon la revendication 7, **caractérisé en ce que** ledit temps de pré-fluxage (Tpref) varie entre 50 ms (Tpref-min) et 150 ms (Tpref-max) quand ladite tension (Vbat+X) varie entre 18 V (V1) et 24V (V2), ledit seuil de référence (Tdem-ref) étant d'environ 440 ms

9. Alterno-démarreur (1) destiné à un moteur thermique (2) d'un véhicule présentant une fonction de freinage récupératif de type micro-hybride, **caractérisé en ce qu'**il comprend le dispositif de contrôle selon l'une quelconque des revendications 5 à 8 précédentes.

## Patentansprüche

1. Verfahren zur Steuerung der Startzeit (Tdem) einer Wärmekraftmaschine (2) eines Fahrzeugs, wobei die Wärmekraftmaschine (2) mechanisch mit einer mehrphasigen elektrischen Drehmaschine mit Induktor (3) gekoppelt ist, die mit einem elektrischen Bordnetzwerk verbunden ist, wobei das Verfahren vom Typ jener ist, darin bestehend, ein Vor-Fluxen durchzuführen, wobei ein Erregerstrom in dem Induktor (8) während einer vorbestimmten Vor-Fluxzeit (Tpref) vor einer Erstellung von Phasenströmen erstellt wird, **dadurch gekennzeichnet, dass** die vorbestimmte Vor-Fluxzeit (Tpref) von der Spannung (Vbat+X) des elektrischen Bordnetzwerks abhängt und erhöht wird, wenn die Spannung (Vbat+X) in einen Nominalspannungsbereich (V1, V2) sinkt.

2. Verfahren zur Steuerung der Startzeit (Tdem) einer Wärmekraftmaschine (2) eines Fahrzeugs nach Anspruch 1, **dadurch gekennzeichnet, dass** die vorbestimmte Vor-Fluxzeit (Tpref) zwischen einem Mindestwert (Tpref-min), unter dem die Startzeit (Tdem) größer als eine Referenzschwelle (Tdem-ref) ist, und einem Höchstwert (Tpref-max), der der magnetischen Sättigung des Induktors (8) entspricht, liegt.

3. Verfahren zur Steuerung der Startzeit (Tdem) einer Wärmekraftmaschine (2) eines Fahrzeugs nach Anspruch 2, **dadurch gekennzeichnet, dass** die vorbestimmte Vor-Fluxzeit (Tpref) für die Referenzschwelle (Tdem-ref) der Startzeit (Tdem) in Abhängigkeit von der Spannung (Vbat+X) während eines vorherigen Schrittes mit Hilfe einer linearen zweidimensionalen Interpolation der Variationen der Startzeit (Tdem) in Abhängigkeit von der Vor-Fluxzeit (Tpref) und einer diskreten Gesamtheit von Niveaus der Spannung (Vbat+X) tabelliert wird.

4. Verfahren zur Steuerung der Startzeit (Tdem) einer Wärmekraftmaschine (2) eines Fahrzeugs nach einem der vorhergehenden Ansprüche 1 bis 3, **dadurch gekennzeichnet, dass** das elektrische Bordnetzwerk an die Klemmen mindestens einer Ultrakapazität (14) oder dergleichen angeschlossen ist.

5. Vorrichtung zur Steuerung der Startzeit (Tdem) einer Wärmekraftmaschine (2) eines Fahrzeugs, die für den Einsatz des Verfahrens nach einem der vorhergehenden Ansprüche 1 bis 4 geeignet ist, wobei die Wärmekraftmaschine (2) mechanisch an eine mehrphasige elektrische Drehmaschine mit Induktor (3) gekoppelt ist, die von Leistungsschaltungen (9, 11) gespeist wird, die an ein elektrisches Bordnetzwerk angeschlossen sind und von einer Steuerschaltung (12) gesteuert werden, **dadurch gekennzeichnet, dass** sie Mittel zur Bestimmung einer Vor-Fluxzeit (Tpref) in Abhängigkeit von einer Spannung des elektrischen Bordnetzwerks (Vbat+X) umfasst.

6. Vorrichtung zur Steuerung der Startzeit (Tdem) einer Wärmekraftmaschine (2) eines Fahrzeugs nach Anspruch 5, **dadurch gekennzeichnet, dass** die Mittel in die Steuerschaltung (12) eingeschlossen sind und einen Speicher umfassen, der eine Tabellierung der Vor-Fluxzeit (Tpref) in Abhängigkeit von der Spannung (Vbat+X) für eine Referenzschwelle der Startzeit (Tdem-ref) enthält.

7. Vorrichtung zur Steuerung der Startzeit (Tdem) einer Wärmekraftmaschine (2) eines Fahrzeugs nach Anspruch 6, **dadurch gekennzeichnet, dass** das elektrische Bordnetzwerk an die Klemmen mindestens einer Ultrakapazität (14) oder dergleichen angeschlossen ist.

8. Vorrichtung zur Steuerung der Startzeit (Tdem) einer Wärmekraftmaschine (2) eines Fahrzeugs nach Anspruch 7, **dadurch gekennzeichnet, dass** die Vor-Fluxzeit (Tpref) zwischen 50 ms (Tpref-min) und 150 ms (Tpref-max) variiert, wenn die Spannung (Vbat+X) zwischen 18V (V1) und 24V (V2) variiert, wobei die Referenzschwelle (Tdem-ref) bei ungefähr 440 ms liegt.

9. Starter-Generator (1), der für eine Wärmekraftmaschine (2) eines Fahrzeugs bestimmt ist und ein rekuperatives Bremssystem mikrohybriden Typs aufweist, **dadurch gekennzeichnet, dass** er die Steuervorrichtung nach einem der vorhergehenden Ansprüche 5 bis 8 umfasst.

## Claims

1. Method for controlling the starting time (Tdem) of a heat engine (2) of a vehicle, said engine (2) being coupled mechanically to a polyphase rotating electrical machine with inductor (3) linked to an onboard electrical network, and said method being of the type of those consisting in performing a prefluxing by establishing an excitation current in said inductor (8) for a predetermined prefluxing time (Tpref) before phase currents are established,
**characterized in that** said predetermined prefluxing time (Tpref) is a function of the voltage (Vbat+X) of said onboard electrical network and is increased when said voltage (Vbat+X) drops into a nominal range of voltages (V1, V2).

2. Method for controlling the starting time (Tdem) of a heat engine (2) of a vehicle according to Claim 1, **characterized in that** said predetermined prefluxing time (Tpref) lies between a minimum value (Tpref-min) below which said starting time (Tdem) is greater than a reference threshold (Tdem-ref), and a maximum value (Tpref-max) corresponding to the magnetic saturation of said inductor (8).

3. Method for controlling the starting time (Tdem) of a heat engine (2) of a vehicle according to Claim 2, **characterized in that** said predetermined prefluxing time (Tpref) is tabulated for said reference threshold (Tdem-ref) of said starting time (Tdem) as a function of said voltage (Vbat+X) during a preliminary stage by means of a two-dimensional linear interpolation of the variations of said starting time (Tdem) as a function of said prefluxing time (Tpref) and of a discrete set of levels of said voltage (Vbat+X).

4. Method for controlling the starting time (Tdem) of a heat engine (2) of a vehicle according to any one of the preceding Claims 1 to 3, **characterized in that** said onboard electrical network is connected to the terminals of at least one ultracapacitor (14), or similar.

5. Device for controlling the starting time (Tdem) of a heat engine (2) of a vehicle suitable for implementing the method according to any one of the preceding Claims 1 to 4, said engine (2) being coupled mechanically to a polyphase rotating electrical machine with inductor (3) powered by power circuits (9, 11) linked to an onboard electrical network and controlled by a control circuit (12), **characterized in that** it comprises means for determining a prefluxing time (Tpref) as a function of a voltage of said onboard electrical network (Vbat+X).

6. Device for controlling the starting time (Tdem) of a heat engine (2) of a vehicle according to Claim 5, **characterized in that** said means are included in said control circuit (12) and comprise a memory containing a tabulation of said prefluxing time (Tpref) as a function of said voltage (Vbat+X) for a reference threshold of said starting time (Tdem-ref).

7. Device for controlling the starting time (Tdem) of a heat engine (2) of a vehicle according to Claim 6, **characterized in that** said onboard electrical network is connected to the terminals of at least one ultracapacitor (14), or similar.

8. Device for controlling the starting time (Tdem) of a heat engine (2) of a vehicle according to Claim 7, **characterized in that** said prefluxing time (Tpref) varies between 50 ms (Tpref-min) and 150 ms (Tpref-max) when said voltage (Vbat+X) varies between 18 V (V1) and 24 V (V2), said reference threshold (Tdem-ref) being approximately 440 ms.

9. Alternator-starter (1) intended for a heat engine (2) of a vehicle having a regenerative braking function of microhybrid type, **characterized in that** it comprises the control device according to any one of the preceding Claims 5 to 8.
